(19) Europäisches Patentamt
European Patent Office
Office européen des brevets

(11) EP 1 762 579 A1

(12) EUROPEAN PATENT APPLICATION
published in accordance with Art. 158(3) EPC

(43) Date of publication:
14.03.2007 Bulletin 2007/11

(21) Application number: 05750885.5

(22) Date of filing: 14.06.2005

(51) Int Cl.:
*C08F 290/04* (2006.01) *C08F 4/80* (2006.01)

(86) International application number:
PCT/JP2005/010820

(87) International publication number:
WO 2006/001189 (05.01.2006 Gazette 2006/01)

(84) Designated Contracting States:
AT BE BG CH CY CZ DE DK EE ES FI FR GB GR HU IE IS IT LI LT LU MC NL PL PT RO SE SI SK TR

(30) Priority: 29.06.2004 JP 2004191816

(71) Applicant: Kaneka Corporation
Kita-ku
Osaka-shi, Osaka 530-8288 (JP)

(72) Inventors:
- FUKUI, Yoshifumi
5600085 (JP)
- SAKAMOTO, Harumi
5660073 (JP)

(74) Representative: Vossius & Partner
Siebertstrasse 4
81675 München (DE)

# (54) POLYOLEFIN GRAFT COPOLYMER, COMPOSITION AND METHOD FOR PRODUCING SAME

(57) The present invention provides a polyolefin graft copolymer produced by copolymerizing a macromonomer latex which is obtained by radical emulsion polymerization of a vinyl monomer, with an olefin monomer, and also provides a method for producing the same, and a composition. A polyolefin graft copolymer can be produced by copolymerizing a macromonomer latex which is obtained by radical emulsion polymerization of a vinyl monomer, with an olefin monomer in the presence of an olefin polymerization catalyst composed of a certain ligand and nickel as the central metal.

EP 1 762 579 A1

## Description

### Technical Field

The present invention relates to a polyolefin graft copolymer produced by copolymerizing a macromonomer latex which is obtained by radical emulsion polymerization of a vinyl monomer, with an olefin monomer. The invention also relates to a method for producing the same, and a composition.

### Background Art

Radical copolymerization of a macromonomer latex which is obtained by radical emulsion polymerization of a vinyl monomer, with a vinyl monomer has been conducted industrially. HIPS, ABS, MBS, and the like thereby are commercially.available and used as impact resistant resin or an impact modifier. However, radical copolymerization of a macromonomer latex which is obtained by radical emulsion polymerization of a vinyl monomer, with an olefin monomer requires very high pressure and is fundamentally difficult to perform.

In the meantime, copolymers of an olefin monomer and a macromonomer latex obtained by radical emulsion polymerization of a vinyl monomer are produced at relatively low pressure in the presence of a late transition metal complex-based coordination polymerization catalyst. In the most preferred example, a combination of a palladium catalyst and a boron cocatalyst is used. However, the palladium catalyst and the boron cocatalyst have a problem of high cost (Patent Document 1).

[Patent Document 1] Japanese Unexamined Patent Application Publication No. 2003-147032.

### Disclosure of Invention

### Problems to be Solved by the Invention

It is an object of the present invention to provide a copolymer of a macromonomer latex which is obtained by radical emulsion polymerization of a vinyl monomer, and an olefin monomer.

### Means for Solving the Problems

In order to overcome the problems described above, as a result of intensive research, the present inventors have completed the present invention. That is, the present invention relates to a polyolefin graft copolymer produced by copolymerization of a macromonomer latex which is obtained by radical emulsion polymerization of a vinyl monomer, with an olefin monomer in the presence of an olefin polymerization catalyst represented by the following general formula (1), (2), or (3) :

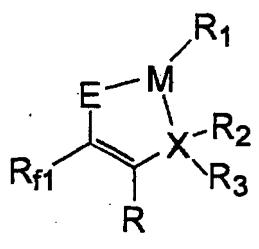

(1)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; $R_{f1}$ represents a fluorine atom or a fluorinated hydrocarbon group having 1 to 20 carbon atoms; and R represents hydrogen, a hydrocarbon group having 1 to 20 carbon atoms, a halogen atom, a halogenated hydrocarbon group having 1 to 20 carbon atoms, a hydroxyl group, an ether group including a hydrocarbon group having 1 to 20 carbon atoms, an ester group including a hydrocarbon group having 1 to 20 carbon atoms, a sulfonate, or a sulfonic ester group including a hydrocarbon group having 1 to 20 carbon atoms)

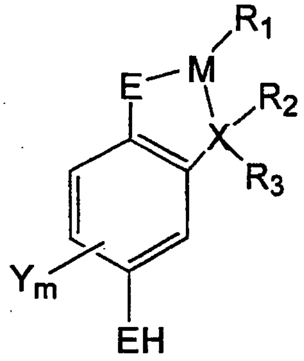

(2)

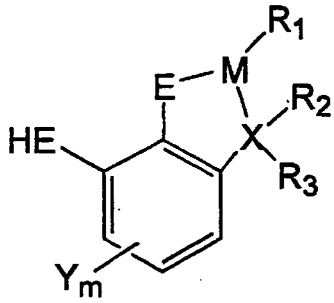

(3)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; Y represents a halogen atom; and m represents 1 to 3) .

A preferred embodiment relates to the polyolefin graft copolymer, wherein the olefin polymerization catalyst is represented by the following general formula (4):

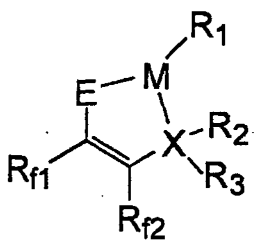

(4)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; and $R_{f1}$ and $R_{f2}$ each independently represent a fluorine atom or a fluorinated hydrocarbon group having 1 to 20 carbon atoms).

A preferred embodiment relates to the polyolefin graft copolymer, wherein, in the olefin polymerization catalyst represented by general formula (1), M represents nickel.

A preferred embodiment relates to the polyolefin graft copolymer, wherein, in the olefin polymerization catalyst represented by general formula (2), M represents nickel and Y represents fluorine.

A preferred embodiment relates to the polyolefin graft copolymer, wherein, in the olefin polymerization catalyst represented by general formula (3), M represents nickel and Y represents fluorine.

A preferred embodiment relates to the polyolefin graft copolymer, wherein, in the olefin polymerization catalyst

represented by general formula (4), M represents nickel.

A preferred embodiment relates to the polyolefin graft copolymer, wherein, in the olefin polymerization catalyst represented by general formula (1), E represents oxygen and X represents phosphorus.

A preferred embodiment relates to the polyolefin graft copolymer, wherein, in the olefin polymerization catalyst represented by general formula (2), E represents oxygen and X represents phosphorus.

A preferred embodiment relates to the polyolefin graft copolymer, wherein, in the olefin polymerization catalyst represented by general formula (3), E represents oxygen and X represents phosphorus.

A preferred embodiment relates to the polyolefin graft copolymer, wherein, in the olefin polymerization catalyst represented by general formula (4), E represents oxygen and X represents phosphorus.

A preferred embodiment relates to the polyolefin graft copolymer, wherein the olefin monomer is an $\alpha$-olefin having 10 or less carbon atoms.

A preferred embodiment relates to the polyolefin graft copolymer, wherein the vinyl monomer is a monomer containing 50 percent or more by weight of a (meth)acrylate.

Furthermore, the present invention relates to a method for producing the polyolefin graft copolymer.

A preferred embodiment relates to the method for producing the polyolefin graft copolymer, the method including the step of decomposing a radical initiator remaining in the macromonomer latex before the step of copolymerizing the olefin monomer.

Furthermore, the present invention relates to a composition containing the polyolefin graft copolymer.

Effect of the Invention

In accordance with the present invention, it is possible to produce a copolymer of a macromonomer latex which is obtained by radical emulsion polymerization of a vinyl monomer, and an olefin monomer without using a cocatalyst. Furthermore, it is also possible to produce a copolymer of a macromonomer latex which is obtained by radical emulsion polymerization of a vinyl monomer, and an olefin monomer using an inexpensive nickel catalyst.

Best Mode for Carrying Out the Invention

The present invention will be described in detail below.

A polyolefin graft copolymer of the present invention can be produced by copolymerizing a macromonomer latex which is obtained by radical emulsion polymerization of a vinyl monomer, with an olefin monomer in the presence of an olefin polymerization catalyst represented by the following general formula (1), (2), or (3) :

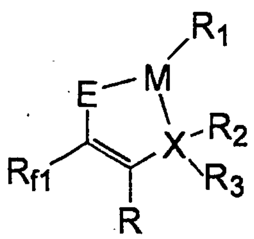

(1)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; $R_{f1}$ represents a fluorine atom or a fluorinated hydrocarbon group having 1 to 20 carbon atoms; and R represents hydrogen, a hydrocarbon group having 1 to 20 carbon atoms, a halogen atom, a halogenated hydrocarbon group having 1 to 20 carbon atoms, a hydroxyl group, an ether group including a hydrocarbon group having 1 to 20 carbon atoms, an ester group including a hydrocarbon group having 1 to 20 carbon atoms, a sulfonate, or a sulfonic ester group including a hydrocarbon group having 1 to 20 carbon atoms)

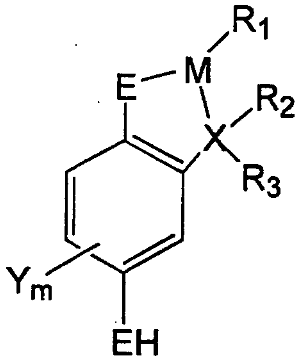

(2)

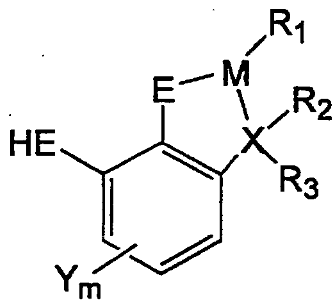

(3)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; Y represents a halogen atom; and m represents 1 to 3).

Among them, preferred is an olefin polymerization catalyst represented by the following general formula (4):

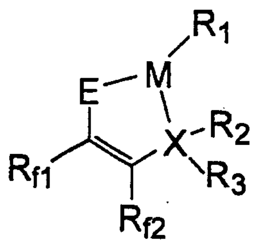

(4)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; and $R_{f1}$ and $R_{f2}$ each independently represent a fluorine atom or a fluorinated hydrocarbon group having 1 to 20 carbon atoms).

The catalyst skeletons represented by general formulae (1) to (4) are known as SHOP catalysts (shell higher olefin process catalysts). It has been reported that, in particular, when $R_{f1}$ represents a fluorinated hydrocarbon group, high ethylene polymerization activity is exhibited even in an emulsion system (Angew. Chem. Int. Ed. 2002, Vol. 41, p. 544). By setting R to be an electron-withdrawing fluorine atom or a fluorinated hydrocarbon group having 1 to 20 carbon atoms, it is possible to obtain a polyolefin having higher activity and/or higher molecular weight.

(Olefin polymerization catalyst)

Preferably, the olefin polymerization catalyst used in the present invention is prepared according to the following reaction:

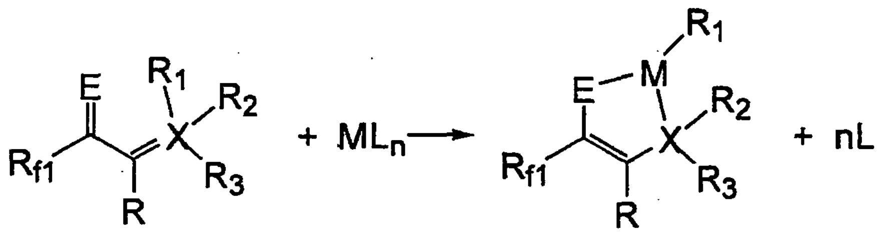

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; $R_{f1}$ represents a fluorine atom or a fluorinated hydrocarbon group having 1 to 20 carbon atoms; R represents hydrogen, a hydrocarbon group having 1 to 20 carbon atoms, a halogen atom, a halogenated hydrocarbon group having 1 to 20 carbon atoms, a hydroxyl group, an ether group including a hydrocarbon group having 1 to 20 carbon atoms, an ester group including a hydrocarbon group having 1 to 20 carbon atoms, a sulfonate, or a sulfonic ester group including a hydrocarbon group having 1 to 20 carbon atoms; $ML_n$ represents a zero-valent nickel, palladium, or platinum compound; L coordinates to M and is not particularly limited as long as the valence of M is maintained to be zero; and n represents a natural number).

Alternatively, preferably, the olefin polymerization catalyst used in the present invention is prepared from the following compounds by in-situ reaction using a ligand prepared in situ.

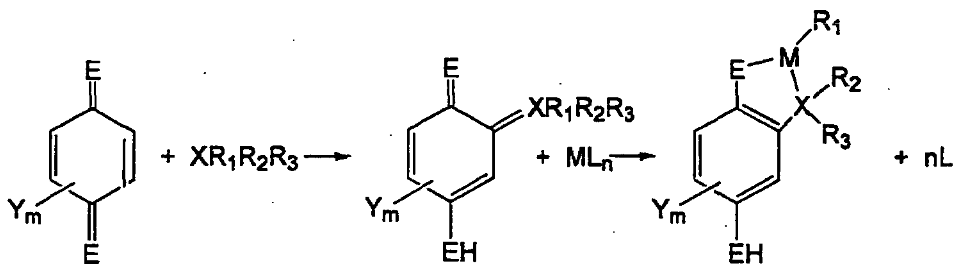

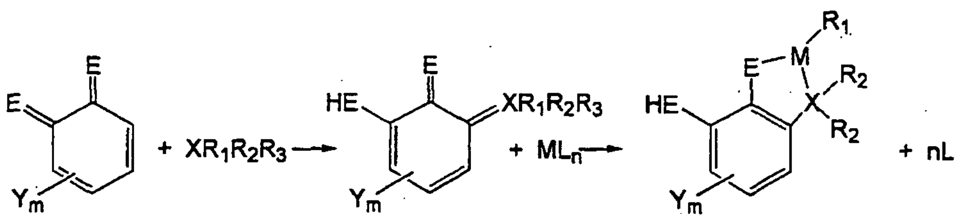

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; Y represents a halogen atom; m represents 1 to 3; $ML_n$ represents a zero-valent nickel, palladium, or platinum compound; L coordinates to M and is not particularly limited as long as the valence of M is maintained to be zero; and n represents a natural number).

In view of the fact that these reactions easily proceed, M is preferably zero-valent nickel. E is preferably oxygen. X is

preferably phosphorus.

$ML_n$ represents a zero-valent nickel, palladium, or platinum compound. As the zero-valent nickel compound, for example, bis(cyclooctadiene)nickel, bis(cyclooctatetraene)nickel, bis(1,3,7-octatriene)nickel, bis(cyclododecatriene) nickel, bis(allyl)nickel, bis(methallyl)nickel, triethylene nickel, bis(butadiene)nickel, or bis(isoprene)nickel is preferable, and bis(cyclooctadiene)nickel is particularly preferable.

The bis(cyclooctadiene)nickel can be synthesized according to a known method, and the resulting solution may be used directly without isolating a solid (for example, according to "Jikken Kagaku Koza" (Courses in Experimental Chemistry), fourth edition, p. 371, synthesis can be performed from a divalent nickel compound, cyclooctadiene or the like, and trialkyl aluminum).

Preferably, $R_{f1}$ and $R_{f2}$ each independently represent a fluorinated hydrocarbon group having 1 to 20 carbon atoms. Specific examples thereof include a trifluoromethyl group, a pentafluoroethyl group, a pentafluoropropyl group, a pentafluorophenyl group, and a trifluoromethyl-substituted phenyl group. In particular, $R_{f1}$ is preferably a trifluoromethyl group, and $R_{f2}$ is preferably a pentafluorophenyl group.

Furthermore, Y is preferably chlorine or fluorine, and particularly preferably fluorine.

In the catalyst of the present invention, as described above, since the electron-withdrawing group, in particular, the fluorinated hydrocarbon group, is located adjacent to oxygen, and adjacent to phosphorus, high activity can be exhibited, and also an olefin polymer having high molecular weight can be produced.

Furthermore, $R_1$, $R_2$, and $R_3$ each independently preferably represent a hydrocarbon group having 1 to 20 carbon atoms, and particularly preferably a substituted aromatic group. A phenyl group is most preferable as the substituted aromatic group.

In order to accelerate the reaction, preferably, phosphine, a phosphine oxide, a ketone, an ester, an ether, an alcohol, a nitrile, an amine, pyridine, an olefin, or the like is allowed to coexist. Particularly preferably, an olefin is allowed to coexist.

The reaction temperature is 0°C to 100°C, and preferably room temperature to 70°C. Although not particularly limited, the reaction time is preferably within one hour, in particular, within 20 minutes.

Preferably, the reaction is carried out under an inert atmosphere, such as argon or nitrogen. In some cases, trace amounts of oxygen and moisture may be present.

Preferably, the reaction is usually carried out using a solvent. As the solvent, an aliphatic or aromatic solvent, which may be halogenated, is preferably used. Examples thereof include toluene, ethylbenzene, xylene, chlorobenzene, dichlorobenzene, butane, isobutane, pentane, hexane, heptane, octane, decane, isododecane, cyclohexane, cycloheptane, methylcyclohexane, methylcycloheptane, ethylcyclohexane, butyl chloride, methylene chloride, and chloroform. In general, the M concentration in the solvent is preferably 1 to 20,000 $\mu$mol/L, and more preferably 10 to 10,000 $\mu$mol/L.

In the reaction, in order to increase the reaction yield, the molar ratio of $ML_n$/ligand is preferably set so that an equivalent or more amount of $ML_n$ is used. The molar ratio of $ML_n$/ligand is preferably 4/1 to 1/1, and more preferably 3/1 to 2/1.

The olefin polymerization catalyst of the present invention may be binuclear.

As the specific examples of the olefin polymerization catalyst of the present invention, those which include nickel are excellent in view of availability. In particular, preferred examples thereof includes the compounds represented by the following general formulae:

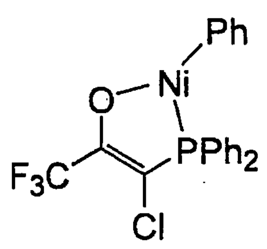

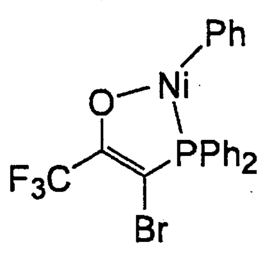

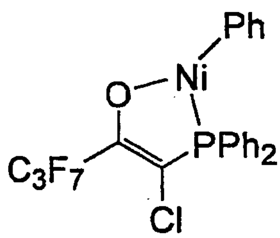

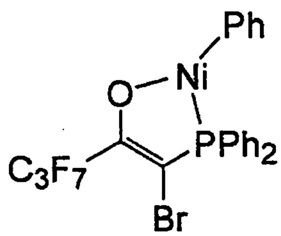

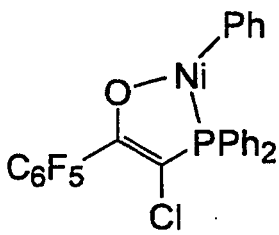

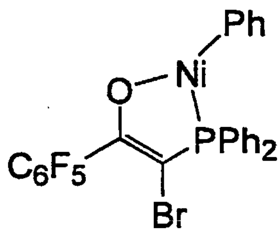

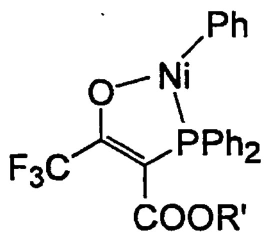

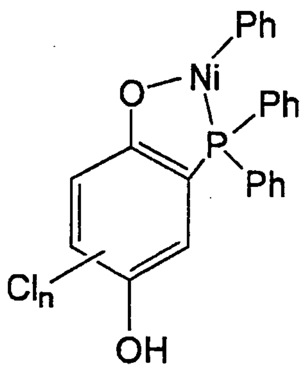

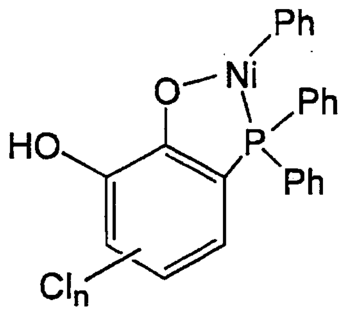

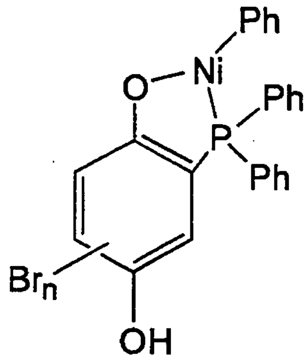
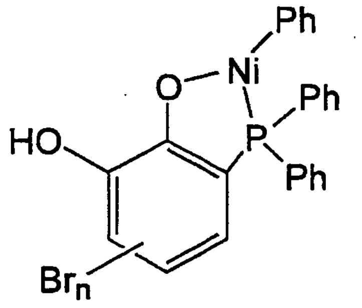

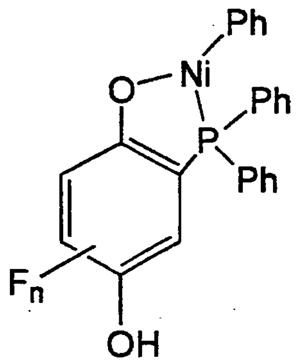
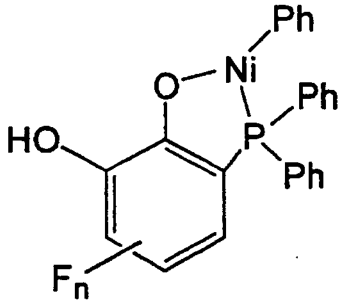

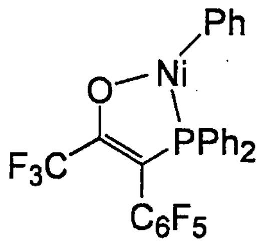
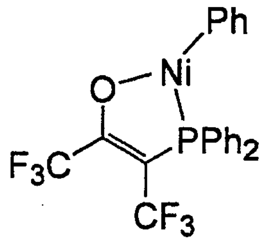
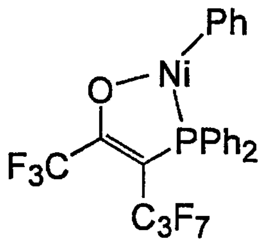

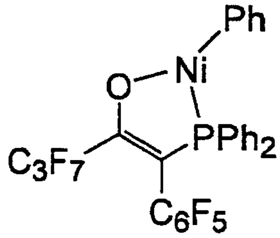
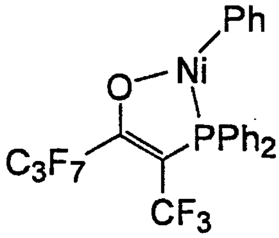
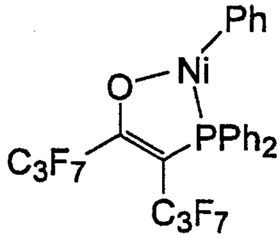

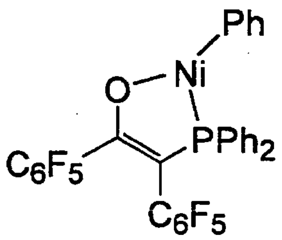

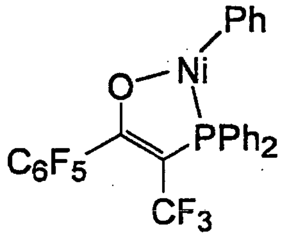

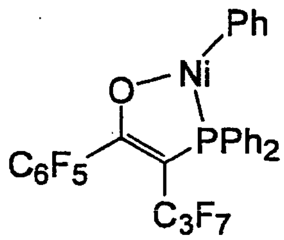

(wherein Ph represents a phenyl group; R' represents a hydrocarbon group having 1 to 6 carbon atoms; and n represents 1 to 3).

(Olefin monomer)

The olefin monomer used in the present invention is not particularly limited, but is preferably an olefin having 2 to 20 carbon atoms. Examples thereof include ethylene, propylene, 1-butene, 1-hexene, 1-octene, 1-decene, 1-hexadecene, 1-eicosene, 4-methyl-1-pentene, 3-methyl-1-pentene, 3-methyl-1-butene, vinylcyclohexane, cyclopentene, cyclohexene, cyclooctene, norbornene, and 5-phenyl-2-norbornene.

Among these, α-olefins having 10 or less carbon atoms are preferred in view of high polymerization activity. Examples thereof include ethylene, propylene, 1-butene, 1-hexene, and 1-octene. These olefin monomers may be used alone or in combinations of two or more.

Furthermore, a small amount of a diene, such as 1,3-butadiene, isoprene, 1,4-hexadiene, 1,5-hexadiene, 1,5-cyclooctadiene, 1,9-decadiene, 1,13-tetradecadiene, norbornadiene, 5-vinyl-2-norbornene, ethylidene norbornene, dimethanooctahydronaphthalene, or dicyclopentadiene, may be combined.

Furthermore, a small amount of a compound represented by the formula $CH_2=CH(CH_2)_nG$ may also be combined, wherein n represents 2 to 20, and G represents a hydroxyl group, a hydroxyl group-containing hydrocarbon group, an ether group, a fluorinated hydrocarbon group, an ester group, a carboxylic acid group, an alkoxysilyl group, or a silanol group.

The amount of the olefin monomer used is not particularly limited. Preferably, the molar ratio of olefin monomer/catalyst (corresponding to the amount of the central metal or the ligand whichever is lower) is 10 to $10^9$, more preferably 100 to $10^7$, and particularly preferably 1,000 to $10^5$. At an excessively small molar ratio, only a polymer with a small molecular weight is obtained. At an excessively large molar ratio, the yield of the polymer relative to the monomer tends to decrease.

(Macromonomer latex obtained by radical emulsion polymerization of vinyl monomer)

In the present invention, the term "macromonomer" means an oligomer or a polymer that has a functional group copolymerizable with another monomer. With respect to macromonomers in general, various types of the main chain structure, the position in which the functional group is introduced, and the production method are known. Examples of the known main chain structure include linear structures, cyclic structures, branched structures, crosslinked structures, particulate structures, single-layered particles, multilayered particles, single-phase particles, multiphase particles, and various other structures. The functional group is known to be introduced to any of various positions, such as a main chain, a side chain, a terminus, the interior of a particle, or the surface of a particle.

In order that a macromonomer is graft-copolymerized with an olefin monomer, the macromonomer must have a group copolymerizable with the olefin. In view of satisfactory grafting efficiency, the macromonomer preferably has at least one group, and more preferably at' least 10 groups, copolymerizable with an olefin per macromonomer molecule. The group copolymerizable with an olefin may be any functional group and is not particularly limited. In view of high reactivity of coordination polymerization, a functional group having an allyl terminus, a cyclic olefin terminus, a styryl terminus, or a (meth)acrylic terminus is preferred. In particular, a functional group having a styryl terminus, a methacrylic terminus, or a dicyclopentenyl terminus is preferred.

When the macromonomer latex obtained by radical emulsion polymerization of a vinyl monomer, which is used in the present invention, is in the form of single-layered or single-phase particles, any of various known macromonomers, such as (meth)acrylic, aromatic vinyl, vinylcyanide, and diene macromonomers, can be suitably used. Preferably, a (meth)acrylic macromonomer containing a poly(meth)acrylate as a main component is used. When the macromonomer latex is in the form of multilayered or multiphase particles, various macromonomers, such as (meth)acrylic, aromatic vinyl, vinylcyanide, and diene monomers, can be suitably used in combination. Preferably, a combination of (meth) acrylic

macromonomers each containing a poly(meth)acrylate as a main component is used.

The single-layered (meth)acrylic macromonomer, i.e., an example of the macromonomer latex obtained by radical emulsion copolymerization of a vinyl monomer, which is used in the present invention, is preferably a (meth) acrylic macromonomer obtained by copolymerization of a (meth)acrylic monomer (A) (hereinafter may be referred to as compound (A) in some cases) and a monomer (B) having at least one radically polymerizable unsaturated group and at least one group copolymerizable with the olefin monomer (hereinafter referred to as compound (B)). As necessary, the (meth)acrylic macromonomer may contain a monomer (C) having a radically polymerizable unsaturated group copolymerizable with the compound (A) and/or the compound (B) (hereinafter referred to compound (C)). Each of the components may be used in any amount, without particular limitations. The compound (A) is preferably used in an amount of 50% to 99.99% by weight, and more preferably 75% to 99.9% by weight. If the amount is excessively small, when the resulting polyolefin graft copolymer is added to a polyolefin or the like to produce a composition, the effect of improving physical properties expected from the characteristics of the (meth)acrylic polymer, in particular, physical properties representing polarity or physical properties exhibited as a result of polarity, such as low contact angle, high surface tension, wettability, adhesiveness, paintability, stainability, colorability, high dielectric constant, high dielectric loss tangent, high loss factor, high-frequency sealing properties, and oil resistance, and furthermore, the effect of improving physical properties, such as weatherability, chemical resistance, and abrasion resistance, expected from the characteristics of the (meth)acrylic polymer can be decreased. The compound (B) is used preferably in an amount of 0.01% to 25% by weight, and more preferably 0.1% to 10% by weight. An excessively small amount causes insufficient grafting with the olefin monomer. An excessively large amount is economically disadvantageous because the compound (B) is generally expensive. The compound (C) is used preferably in an amount of 0% to 50% by weight, and more preferably 0% to 25% by weight. An excessively large amount may decrease the effect of improving physical properties expected from the characteristics of the (meth)acrylic polymer when the polyolefin graft copolymer is added to a polyolefin resin. Note that the total of the compound (A), the compound (B), and the compound (C) is 100% by weight.

The compound (A) is a component that constitutes the main skeleton of the (meth)acrylic macromonomer. Specific examples of the compound (A) include, but are not limited to, alkyl acrylates, such as methyl acrylate, ethyl acrylate, propyl acrylate, n-butyl acrylate, tert-butyl acrylate, 2-ethylhexyl acrylate, 2-hydroxyethyl acrylate, 2-hydroxypropyl acrylate, and methoxy tripropylene glycol acrylate; alkyl methacrylates, such as methyl methacrylate, ethyl methacrylate, butyl methacrylate, 2-ethylhexyl methacrylate, lauryl methacrylate, benzyl methacrylate, glycidyl methacrylate, and hydroxyethyl methacrylate; (meth)acrylic acids, such as acrylic acid and methacrylic acid; acid anhydrides thereof; and metal salts thereof. Among these, in view of availability of the resulting (meth)acrylic macromonomer and economics, alkyl (meth)acrylates containing an alkyl group having 2 to 18 carbon atoms are preferable, and n-butyl acrylate, tert-butyl acrylate, methyl methacrylate, butyl methacrylate, glycidyl methacrylate, and 2-hydroxyethyl acrylate are more preferable. These compounds (A) may be used alone or in combination of two or more.

The compound (B) is a component that is copolymerized, by its radically polymerizable unsaturated group, with the compound (A) and, in some cases, the compound (C) to produce a copolymer, resulting in the introduction of a group copolymerizable with the olefin monomer into a side chain or a terminus of the copolymer, thus enabling graft copolymerization of the copolymer and the olefin monomer. The group copolymerizable with the olefin monomer may be any functional group without limitations and may be located anywhere, such as inside the monomer molecule or at a terminus. In view of high reactivity of coordination polymerization, a functional group having an allyl terminus ($\alpha$-olefin structure), a cyclic olefin terminus, a styryl terminus, or a (meth)acryl terminus is preferred. In particular, a functional group having a (meth)acryl terminus, a styryl terminus, or a dicyclopentenyl terminus is preferred.

When the group copolymerizable with the olefinic monomer has both radical polymerizability and coordination polymerizability, the radically polymerizable unsaturated group contained in the compound (B) may be the same as or different from the group copolymerizable with the olefinic monomer. When the two groups are the same, the compound (B) contains two or more radically polymerizable unsaturated groups (which are also copolymerizable with the olefinic monomer) per molecule. However, during the synthesis of the (meth)acryl macromonomer, the reaction can be controlled by terminating the reaction when the radically polymerizable unsaturated groups proceed with the radical polymerization reaction to a certain extent that unreacted radically polymerizable unsaturated groups (which are also copolymerizable with the olefinic monomer) can remain in the resulting (meth)acryl macromonomer.

Typical examples of the compound (B) include ethylene glycol dimethacrylate, divinylbenzene, ethylene glycol dicyclopentenyl ether methacrylate, and allyl methacrylate. These compounds (B) may be used alone or in combination of two or more. Among these, in view of high grafting efficiency with the polyolefin monomer, ethylene glycol dicyclopentenyl ether methacrylate is preferable.

The compound (C) is a component for adjusting various physical properties, such as elastic modulus, Tg, and refractive index, of the (meth)acrylic macromonomer. As the compound (C), any monomer that is copolymerizable with the compound (A) and/or the compound (B) can be used without particular limitations. Such a monomer may be used alone or two or more monomers may be used in combination. Specific examples of the compound (C) include, but are not limited to, styrene, $\alpha$-methylstyrene, 1-vinylnaphthalene, 2-vinylnaphthalene, 1,3-butadiene, isoprene, chloroprene,

acrylonitrile, methacrylonitrile, vinyl acetate, and vinyl ethyl ether.

The (meth)acrylic macromonomer used in the present invention is produced by radical (co)polymerization using an ordinary emulsion polymerization technique and is obtained as a latex.

During the emulsion polymerization, all of the starting materials may be fed once, or the starting materials may be continuously or intermittently added in divided portions after feeding some of the starting materials. For example, the reaction caused by adding the compound (B) after reacting the compound (A) can yield a designed structure in which coordination polymerizable unsaturated groups are locally present on the surface layers of the (meth)acryl macromonomer particles. A process in which the compound (A), the compound (B), the compound (C), or a mixture thereof may be emulsified in advance using an emulsifier and water and a process in which an emulsifier or an aqueous solution of an emulsifier is added either continuously or in divided portions separately from the compound (A), the compound (B), the compound (C), or a mixture thereof, or the like may be used.

The amount of water used in the emulsion polymerization is not particularly limited. The amount should be sufficient to allow emulsification of the compounds (A), (B), and (C). In general, the amount of water is 1 to 20 times the total amount of the compounds (A), (B), and (C). If the amount of water used is excessively small, the proportion of the hydrophobic compounds (A), (B), and (C) becomes excessively large. As a result, the emulsion does not undergo phase transfer from water-in-oil to oil-in-water, and water rarely forms a continuous layer. When the amount of water used is excessively large, stability is degraded, and the production efficiency is decreased.

Any known emulsifier can be used in the emulsion polymerization, and any one of anionic, cationic, and nonionic emulsifiers can be used without particular limitations. In view of good emulsifying ability, anionic emulsifiers, such as alkali metal salts of an alkylbenzene sulfonic acid, alkali metal salts of an alkylsulfuric acid, and alkali metal salts of an alkylsulfosuccinic acid, are preferred. The amount of the emulsifier used is not particularly limited and may be appropriately adjusted depending on the average particle size of the desired (meth)acrylic macromonomer or the like. Preferably, the emulsifier is used in an amount of 0.1 to 10 parts by weight relative to 100 parts by weight of the monomers.

The average particle size of the (meth)acrylic macromonomer can be controlled using an ordinary emulsion polymerization technique, such as increasing or decreasing of the amount of the emulsifier used. From the standpoint that good dispersibility is obtained when the resulting polyolefin graft copolymer is mixed with a polyolefin or the like to produce a composition, the average particle size of the (meth)acrylic macromonomer is in a range of 20 to 2,000 nm, preferably in a range of 50 to 1,500 nm, and more preferably in a range of 100 to 1,000 nm. Herein, the average particle size of the macromonomer is a volume average particle size measured by the dynamic light scattering method using a sample prepared by dispersing the macromonomer in water.

Although a known redox initiator or polymerization initiator can be used as the polymerization initiator for the emulsion polymerization, a polymerization initiator is preferable because of ease of use.

. Examples of the polymerization initiator include persulfates, such as potassium persulfate and ammonium persulfate; alkyl hydroperoxides, such as tert-butyl hydroperoxide and cumene hydroperoxide; diacyl peroxides, such as benzoyl peroxide; dialkyl peroxides, such as di-tert-butyl peroxide and tert-butyl peroxylaurate; and azo compounds, such as 2,2'-azobisisobutyronitrile and 2,2'-azobis-2,4-dimethylvaleronitrile. Among these, persulfates are preferred.

The polymerization initiator is used preferably in an amount of 0.005 to 2 parts by weight, more preferably 0.01 to 1 part by weight, relative to 100 parts by weight of a vinyl monomer. If the amount of use is within this range, the rate of polymerization is sufficiently high and coloring and precipitation of the product can be suppressed, thus being preferable.

The reaction temperature during the emulsion polymerization is not particularly limited, but is preferably 0°C to 100°C, and more preferably 30°C to 100°C. The reaction time is also not particularly limited. The reaction time is usually 10 minutes to 24 hours, preferably 30 minutes to 12 hours, and more preferably 1 hour to 6 hours.

When the macromonomer latex obtained by radical emulsion polymerization of a vinyl monomer, which is used in the present invention, has a multilayered (multiphase) structure, the types and combinations of polymers constituting the individual layers (phases) are not particularly limited and known polymers and combinations may be used. The number of layers (phases) is also not limited, the multilayered structure may include two layers (phases) or any higher number of layers (phases). The polymer (oligomer) constituting each layer (phase) may be crystalline or amorphous. The polymer may be a rubbery polymer or a hard polymer. The combination of the individual layers (phases) can be selected in any manner. In the case of the multilayered structure, from the standpoint that the resulting copolymer has satisfactory handling ability, a multilayered structure including at least one layer composed of a rubbery polymer and at least one layer composed of a hard polymer is preferable, and a two-layered structure in which a shell layer composed of a hard polymer is disposed around a core layer composed of a rubbery polymer is particularly preferable. The structure may be a partially covered core-shell structure in which a shell layer covers only a part of a core layer or a salami-like structure in which a plurality of core particles are dispersed in a shell layer.

The terms "rubbery polymer" and "hard polymer" used herein are the same as those generally used in the core-shell polymer field.

The macromonomer having a multilayered structure, which is used in the present invention, can be produced by a common emulsion polymerization technique. For example, a radically polymerizable monomer is subjected to

emulsion polymerization to form a first layer, and a monomer is then added and polymerized to form a second layer, thus producing a macromonomer latex having a two-layered structure. As necessary, an emulsifier, a polymerization initiator, and the like may be added.

The particle size of the macromonomer latex having a multilayer structure, which is used in the present invention, is in a range of 20 to 2,000 nm, preferably 50 to 1,500 nm, and more preferably 100 to 1,000 nm. When a macromonomer having a particle size within the above range is used, dispersibility of the resulting polyolefin graft copolymer in a polyolefin or the like is particularly excellent. Herein, the average particle size of the macromonomer is a volume average particle size measured by the dynamic light scattering method using a sample prepared by dispersing the macromonomer in water.

When the macromonomer having a multilayer structure, which is used in the present invention, contains a rubbery polymer and a hard polymer, the polymer constituting the rubbery polymer layer preferably has a glass transition temperature of 20°C or lower, more preferably 0°C or lower, and particularly preferably -20°C or lower. The polymer constituting the hard polymer layer preferably has a glass transition temperature of 30°C or higher, more preferably 50°C or higher, and particularly preferably 80°C or higher. The glass transition temperature (Tg) of a polymer and the measuring method thereof, with respect to a homopolymer, can be obtained from the data in Polymer Handbook Fourth Edition (by John Wiley & Sons). With respect to a copolymer, the Tg can be calculated, using the data, according to the Fox equation:

$$Tg^{-1} = w_1 Tg_1^{-1} + w_2 Tg_2^{-1}$$

where $Tg_1$ and $Tg_2$ are the glass transition temperatures of the individual components, and $w_1$ and $w_2$ are the weight fractions of the individual components.

The ratio by weight of rubbery polymer/hard polymer is preferably 70/30 to 95/5, and more preferably 80/20 to 90/10 in view of excellent balance between the handling ability of the resulting polyolefin graft copolymer and the low elastic modulus of a composition containing the graft copolymer.

Specific examples of the polymer constituting the rubbery polymer layer include diene rubbers, (meth)acrylic rubbers, styrene-diene copolymer rubbers, and (meth)acrylic-silicone composite rubbers. Among these, (meth)acrylic rubbers are preferred. In the present invention, the term "(meth)acrylic rubber" means a rubbery polymer containing 50% by weight or more of a (meth)acrylic monomer and less than 50% by weight of a monomer copolymerizable with the (meth)acrylic monomer.

The content of the (meth)acrylic monomer constituting the (meth) acrylic rubber is preferably 75% by weight or more, and more preferably 90% by weight or more. The content of the monomer copolymerizable with the (meth) acrylic monomer is preferably less than 25% by weight, and more preferably 10% by weight.

A rubbery polymer core-hard polymer shell structure, which is a preferred example of the macromonomer having a multilayer structure, will be described below.

A (meth)acrylic rubber, which is a preferred example of a polymer constituting the rubbery polymer core, is preferably a (meth)acrylic rubber produced by copolymerizing a (meth)acrylic monomer (D) (hereinafter referred to as compound (D)) with a monomer (E) (hereinafter referred to as compound (E)) having at least two radically polymerizable unsaturated groups per molecule. As necessary, the (meth)acrylic rubber may also include a monomer (F) (hereinafter referred to as compound (F)) copolymerizable with the compound (D) and/or the compound (E). Each of the components may be used in any amount, without particular limitations. The compound (D) is used preferably in an amount of 50% to 99.99% by weight, and more preferably 75% to 99.9% by weight. As the amount of the compound (D) used increases, the increase in elastic modulus when the resulting polyolefin graft copolymer is added to a polyolefin or the like can be suppressed more reliably. The compound (E) is used preferably in an amount of 0.01% to 25% by weight, and more preferably 0.1% to 10% by weight. When the amount of use is in this range, the balance between the grafting efficiency of the rubbery polymer and the hard polymer and low elastic modulus is particularly satisfactory. The compound (F) is used preferably in an amount of 0% to 50% by weight, and more preferably 0% to 25% by weight. Note that the total of the compound (D), the compound (E), and the compound (F) is 100% by weight.

The compound (D) is a component that constitutes the main skeleton of the (meth)acrylic rubber. Specific examples of the compound (D) include, but are not limited to, (meth)acrylates, such as methyl acrylate, ethyl acrylate, propyl acrylate, n-butyl acrylate, 2-ethylhexyl acrylate, 2-ethylhexyl methacrylate, and lauryl methacrylate. A (meth) acrylic monomer, such as tert-butyl acrylate, hexadecyl acrylate, phenyl acrylate, methyl methacrylate, ethyl methacrylate, benzyl methacrylate, glycidyl methacrylate, 2-hydroxyethyl methacrylate, acrylic acid, or methacrylic acid, that forms a hard polymer when homopolymerized, can also be used if the amount of use is controlled so as to form a rubbery polymer by copolymerization with the other compounds (D), (E), and (F). Among these, in view of availability of the resulting (meth)acrylic rubber and economics, an alkyl (meth)acrylate containing an alkyl group having 2 to 18 carbon atoms is preferred, and n-butyl acrylate is more preferred. These compounds (D) may be used alone or in combination of two or more.

The compound (E) is a component that enables graft copolymerization of a rubbery polymer constituting a core and a hard polymer constituting a shell. In part of the compound (E), only one of the radically polymerizable unsaturated groups per molecule is copolymerized with the compound (D) and the compound (F) to introduce an unreacted radically polymerizable unsaturated group into the (meth)acrylic rubber, thus enabling copolymerization with the hard polymer. In the rest of the compound (E), a plurality of radically-polymerizable unsaturated groups per molecule are allowed to react to introduce a crosslinking structure into the (meth)acrylic rubber.

Specific examples of the compound (E) include allyl methacrylate, allyl acrylate, diallyl phthalate, triallyl cyanurate, triallyl isocyanurate, and ethylene glycol diacrylate. These compounds (E) may be used alone or in combination of two or more. Among these, in view of satisfactory grafting efficiency with a vinyl monomer, allyl methacrylate is preferred.

The compound (F) is a component for adjusting various physical properties, such as elastic modulus, Tg, and refractive index, of the (meth)acrylic rubber. As the compound (F), any monomer that is copolymerizable with the compound (D) and/or the compound (E) can be used without particular limitations. Such a monomer may be used alone or two or more monomers may be used in combination. Specific examples of the compound (F) include, but are not limited to, styrene, $\alpha$-methylstyrene, 1-vinylnaphthalene, 2-vinylnaphthalene, 1,3-butadiene, isoprene, chloroprene, acrylonitrile, methacrylonitrile, vinyl acetate, and vinyl ethyl ether.

The (meth)acrylic rubber is produced by conducting radical (co)polymerization using an ordinary emulsion polymerization method and can be obtained as a latex.

In the emulsion polymerization, the entire amount of the starting materials may be fed at one time. Alternatively, after part of the starting materials is fed, the remaining portion may be added continuously or intermittently. Examples of the methods employable include a method in which any of the compound (D), the compound (E), and the compound (F), or a mixture of these is emulsified in advance with an emulsifier and water, and the resulting emulsion is then added; and a method in which separately from any of the compound (D), the compound (E), and the compound (F), or a mixture of these, an emulsifier, an aqueous solution of an emulsifier, or the like is added continuously or in divided portions.

The amount of water used in the emulsion polymerization is not particularly limited as long as it is sufficient for emulsifying the compound (D), the compound (E), and the compound (F). Usually, water is used in a weight of 1 to 20 times the total weight of the compound (D), the compound (E), and the compound (F).

With respect to the emulsifier, the initiator, and the like used in the emulsion polymerization, the same compounds as those included in the preferred examples in the method for producing the (meth)acrylic macromonomer latex described above can be used.

Examples of the polymer constituting the hard polymer shell include polyvinylcyanide, polyaromatic vinyl, poly (alkyl (meth)acrylates), and maleimide polymers. Among these, poly(alkyl (meth)acrylates) are preferred.

A poly(alkyl (meth)acrylate), which is a preferred example of the polymer constituting the hard polymer, is preferably a hard polymer produced by copolymerizing a (meth)acrylic monomer (G) (hereinafter referred to as compound (G)) and a monomer (H) (hereinafter referred to as compound (H)) having at least one radically polymerizable unsaturated group and at least one group copolymerizable with an olefin monomer per molecule. As necessary, the poly(alkyl (meth) acrylate) may also include a monomer (I) (hereinafter referred to as compound (I)) copolymerizable with the compound (G) and/or the compound (G). Each of the components may be used in any amount, without particular limitations. The compound (G) is used preferably in an amount of 50% to 99.99% by weight, and more preferably 75% to 99.9% by weight. As the amount increases, handling ability of the resulting macromonomer and a copolymer obtained by grafting an olefin monomer thereto improves. The compound (H) is used preferably in an amount of 0.01% to 25% by weight, and more preferably 0.1% to 10% by weight. When the amount of use is in this range, grafting efficiency with an olefin monomer and handling ability are particularly satisfactory. The compound (I) is used preferably in an amount of 0% to 50% by weight, and more preferably 0% to 25% by weight. Note that the total of the compound (G), the compound (H), and the compound (I) is 100% by weight.

The compound (G) is a component that constitutes the main skeleton of the poly(alkyl (meth)acrylate) and improves the handling ability of the resulting macromonomer and a copolymer obtained by grafting an olefin monomer thereto. Specific examples of the compound (G) include, but are not limited to, (meth)acrylates, such as tert-butyl acrylate, hexadecyl acrylate, phenyl acrylate, methyl methacrylate, ethyl methacrylate, benzyl methacrylate, glycidyl methacrylate, and 2-hydroxyethyl methacrylate; (meth)acrylic acids, such as acrylic acid and methacrylic acid; acid anhydrides thereof; and metal salts thereof. Among these, in view of availability of the resulting hard polymer and economics, alkyl (meth) acrylates containing an alkyl group having 2 to 18 carbon atoms are preferred, and tert-butyl acrylate, methyl methacrylate, and glycidyl methacrylate are more preferred. These compounds (G) may be used alone or in combination of two or more. A monomer, such as methyl acrylate, ethyl acrylate, propyl acrylate, n-butyl acrylate, 2-ethylhexyl acrylate, 2-ethylhexyl methacrylate, or lauryl methacrylate, that forms a rubbery polymer when homopolymerized, can also be used if the amount of use is controlled so as to form a hard polymer by copolymerization with the other components (G), (H), and (I).

The compound (H) is a component that is copolymerized, by its radically polymerizable unsaturated group, with the compound (G) and in some cases, the compound (I) to produce a copolymer, resulting in the introduction of a

group copolymerizable with an olefin monomer into a macromonomer having a multilayer structure, thus enabling graft copolymerization of the copolymer and an olefin monomer. The group copolymerizable with the olefin monomer may be any functional group and is not particularly limited. In view of high reactivity of coordination polymerization, a functional group having an allyl terminus, a cyclic olefin terminus, a styryl terminus, or a (meth)acrylic terminus is preferred. In particular, a functional group having a (meth)acrylic terminus, a styryl terminus, or a dicyclopentenyl terminus is preferred.

When the group copolymerizable with the olefin monomer has both radical polymerizability and coordination polymerizability, the radically polymerizable unsaturated group and the group copolymerizable with the olefin monomer possessed by the compound (H) may be the same or different. When the two groups are the same, the compound (H) contains two or more radically polymerizable unsaturated groups (which are also groups copolymerizable with the olefin monomer) per molecule. However, during the synthesis of a (meth)acrylic hard shell, the reaction can be controlled by terminating the reaction when the radically polymerizable unsaturated groups proceed with the radical polymerization reaction to a certain extent that unreacted radically polymerizable unsaturated groups (which are also groups copolymerizable with the olefin monomer) remain in the resulting macromonomer.

Specific examples of the compound (H) include ethylene glycol dimethacrylate, divinylbenzene, ethylene glycol dicyclopentenyl ether methacrylate, and allyl methacrylate. These compounds (H) may be used alone or in combination of two or more. Among these, in view of satisfactory grafting efficiency with the olefin monomer, ethylene glycol dicyclopentenyl ether methacrylate is preferred.

The compound (I) is a component for adjusting various physical properties, such as elastic modulus, Tg, and refractive index, of the poly(meth)acrylic hard shell. Preferred examples thereof are the same as those of the compound (F) in the (meth)acrylic rubber described above.

The poly(alkyl (meth)acrylate) can be produced by the same method as that for the (meth)acrylic rubber. A latex of a rubbery polymer, the compound (G), the compound (H), the compound (I) as required, a polymerization initiator, an emulsifier, etc. are mixed and polymerization is performed to obtain a macromonomer having a multilayered structure.

Known polymerization initiators, emulsifiers, and the like may be used in the emulsion polymerization. Those described as preferred examples in the above-mentioned method for producing the (meth)acrylic rubber can be preferably used.

(Polyolefin graft copolymer)

Next, a method for producing a polyolefin graft copolymer of the present invention is described.

The polyolefin graft copolymer of the present invention is produced by a method under a certain emulsion polymerization condition in which a specific coordination polymerization catalyst is dispersed in a macromonomer latex obtained by radical emulsion polymerization of a vinyl monomer, and copolymerization with an olefin monomer is performed. According to need, additives, such as an emulsifier, an organic solvent and the like, may be added. The order and method of feeding the starting materials are not particularly limited. In view of the ease of reaction control, the olefin monomer is added to the dispersion preferably after the coordination polymerization catalyst, the solvent, the emulsifier and the like are added to and dispersed in the macromonomer latex. When the olefin monomer to be used is gaseous at the reaction temperature, the olefin monomer may be fed as a gas, or the olefin monomer may be fed in a liquid condensed or a solid solidified at low temperature, followed by heating the system to the reaction temperature. All of the macromonomer latex, the olefin monomer, and the coordination polymerization catalyst may be fed to the reactor at one time. Alternatively, after part of these materials is fed to the reactor, the remaining portion may be continuously or intermittently added to the system. These materials may be fed directly or in emulsion by mixing with water and an emulsifier.

In the present invention, if necessary, before the copolymerization of the olefin monomer, the radical initiator remaining in the macromonomer latex may be decomposed.

The reaction temperature during the above process is not particularly limited, but preferably 50°C to 100°C. The reaction time also is not particularly limited, but usually 1 to 6 hours. These temperature and time can be determined from the half-life temperature of the polymerization initiator to be used.

For example, when the half-life at a certain temperature is 30 minutes, a reaction for 3 hours at the temperature can reduce the remaining radical initiator to 1/64, thus enabling substantial decomposition of the remaining radical initiator.

The ratio of the olefin monomer to the macromonomer to be used can be set as desired. The olefin monomer is preferably used in an amount of 1 to 100 parts by weight, and more preferably 2 to 33 parts by weight, relative to 100 parts by weight of the macromonomer used. When the olefin monomer is a volatile liquid having a boiling point of 100°C or lower, or a gas, the olefin monomer in a large excess amount may be used, and the unreacted monomer can be removed by applying a heat or a vacuum after the reaction is terminated at the point where the monomer in the preferable amount as mentioned above is polymerized.

During the polymerization, in order that the solubility of the olefin monomer and the coordination polymerization catalyst is improved to accelerate the reaction, a small amount of an organic solvent may be added. The solvent is not

particularly limited, but is preferably an aliphatic or aromatic solvent, which may be halogenated. Examples of the solvent include toluene, ethylbenzene, xylene, chlorobenzene, dichlorobenzene, butane, isobutane, pentane, hexane, heptane, octane, decane, isododecane, cyclohexane, cycloheptane, methylcyclohexane, methylcycloheptane, ethylcyclohexane, butyl chloride, methylene chloride, and chloroform. The solvent may be a polar solvent, such as tetrahydrofuran, dioxane, diethyl ether, ethylene glycol, acetone, ethanol, methanol, methyl ethyl ketone, methyl isobutyl ketone, or ethyl acetate. Solvents which have low solubility with respect to water, which are relatively easily impregnated in the macromonomer used, and which easily dissolve catalysts are particularly preferred. Examples of such particularly preferred solvents include toluene, ethylbenzene, xylene, chlorobenzene, and dichlorobenzene.

These solvents may be used alone or in combination of two or more. The total amount of the solvent used is preferably 30% by volume or less, and more preferably 10% by volume or less, relative to the total volume of the reaction solution. Alternatively, the total amount of the solvent is preferably 150 parts by weight or less, and more preferably 50 parts by weight or less, relative to 100 parts by weight of the macromonomer used. From the standpoint that the reaction rate is further improved, the amount of the solvent used is preferably large. From the standpoint that a homogeneous reaction system can be easily maintained, the amount of the solvent used is preferably small.

The reaction temperature, pressure, and time in the production of the polyolefin graft copolymer of the present invention may be selected as desired depending on the boiling points of the starting materials used and the reaction rate. Although not particularly limited, from the standpoint of easy controllability of the reaction and reduction of the production cost, the reaction temperature is preferably -30°C to 200°C, more preferably 0°C to 100°C, and particularly preferably room temperature to 70°C; the reaction pressure is preferably 0.05 to 10 MPa, and more preferably 0.1 to 3 MPa; and the reaction time is preferably 10 minutes to 100 hours, and more preferably 0.5 to 5 hours. The temperature and the pressure may be kept constant from the initiation to the termination of the reaction or may be changed continuously or stepwise in the course of the reaction. When the olefin monomer used is gaseous, the pressure can decrease gradually as the olefin monomer is consumed by polymerization reaction. In such a case, the reaction may be conducted while leaving the pressure as it is changed. Alternatively, the reaction may be conducted while feeding the olefin monomer according to the amount of consumption or heating so that the pressure is maintained at a constant level.

The polymerization is preferably conducted under an inert atmosphere, for example, under an argon or nitrogen atmosphere. In some cases, a trace amount of oxygen may be present.

Further, the polymerization may be conducted by any of the methods including a batch (non-continuous) method, a semicontinuous method, and a continuous method.

The polyolefin graft copolymer according to the present invention is usually obtained as a latex. Particle size of the latex depends on the particle size of a macromonomer used as a starting material and amount of the reacted olefin monomer. In view of the particularly excellent dispersibility in polyolefin or the like, the particle size is preferably in the range of 20 to 2,000 nm, more preferably in the range of 50 to 1,500 nm, and still more preferably in the range of 100 to 1,000 nm. Depending on reaction conditions, latex particles are partly aggregated to precipitate, or free polyolefins are by-produced to precipitate. Thus the reaction is preferably conducted under conditions without producing such precipitates.

The resulting latex containing the polyolefin graft copolymer of the present invention may be used as it is. Alternatively, additives may be added to the latex, or the latex may be blended with other latex. The latex may be used after treatments, such as dilution, concentration, heat treatment, or deaeration treatment. The latex may be applied onto a substrate composed of a plastic, a metal, wood, glass, or the like, as a coating agent, a paint, a surface treatment agent, or the like. Furthermore, the latex may be impregnated into fibers, paper, a cloth, carbon fibers, glass wool, or the like, as a modifier, a curing agent, or the like. The latex may also be used as a material for fiber-reinforced plastics or cast films.

A latex containing the polyolefin graft copolymer of the present invention may be dehydrated to isolate the solid component and the isolated solid component can be used for various applications. Examples of the method for isolating the solid component from the latex include, but are not limited to, a method (salting-out) in which aggregation is performed by addition of an electrolyte, such as calcium chloride, magnesium chloride, calcium sulfate, magnesium sulfate, aluminum sulfate, or calcium formate; a method in which aggregation is performed by mixing with a hydrophilic organic solvent such as methanol; a method in which the solid component is aggregated by a mechanical operation, such as ultrasonic treatment, high-speed stirring, or centrifugal separation; and a method in which water is removed by a drying operation, such as spray drying, heat drying, freeze drying, or vacuum drying. A washing operation with water and/or an organic solvent or the like may also be performed in any stage during a series of steps of isolating the polyolefin graft copolymer of the present invention from the latex.

The polyolefin graft copolymer of the present invention can be isolated in a powder form or block form by aggregating the solid component of the latex or by drying the solid component to remove a water content. The dry product may be pelletized with an extruder, a Banbury mixer, or the like. A water-containing (solvent-containing) resin obtained by dehydrating (desolvating) the aggregated product may be pelletized with a compressing dehydrator and the pellets may be isolated. In view of high handling ability, the copolymer is preferably isolated in a powder form.

By blending the polyolefin graft copolymer of the present invention with any of various thermoplastic resins or elastomers, a composition of the present invention can be obtained.

Preferred examples of the thermoplastic resin or elastomer include resins or elastomers that are commonly used, namely, polyolefin resins or elastomers, such as polypropylene, polyethylene, ethylene propylene rubber, ethylene propylene diene rubber, ethylene octene rubber, polymethylpentene, ethylene-cyclic olefin copolymers, ethylene-vinyl acetate copolymers, ethylene-glycidyl methacrylate copolymers, and ethylene-methyl methacrylate copolymers; vinyl polymers, such as polyvinyl chloride, polystyrene, poly(methyl methacrylate), methyl methacrylate-styrene copolymers, styrene-acrylonitrile copolymers, styrene-acrylonitrile-N-phenylmaleimide copolymers, and $\alpha$-methylstyrene-acrylonitrile copolymers; and engineering plastics, such as polyesters, polycarbonates, polyamides, polyphenylene ether-polystyrene complexes, polyacetals, polyether ether ketones, and polyethersulfones. These thermoplastic resins or elastomers may be used alone or in combination of two or more. Among these, polyolefin resins, in particular, polyethylene and polypropylene, are preferred from the standpoint that the dispersibility of the polyolefin graft copolymer of the present invention is satisfactory.

The blending ratio between the thermoplastic resin or the elastomer and the graft copolymer of the present invention may be appropriately determined so that the resulting molded object has well-balanced physical properties. In order to achieve satisfactory physical properties, the amount of the graft copolymer is preferably 0.1 parts or more, and more preferably 5 parts or more, relative to 100 parts of the thermoplastic resin or the elastomer. In order to maintain the characteristics of the thermoplastic resin or the elastomer, the amount of the graft copolymer is preferably 500 parts or less, and more preferably 100 parts or less, relative to 100 parts of the thermoplastic resin or the elastomer.

Since the polyolefin graft copolymer of the present invention contains the polyolefin component, the copolymer exhibits satisfactory dispersibility even in resins having low polarity, such as polyethylene and polypropylene. In addition, various functions derived from the functional group contained in the macromonomer can be imparted thereto.

When a single-layered (meth)acrylic macromonomer or a multilayered macromonomer having a (meth)acrylic rubber-(meth)acrylic hard shell structure is used as a starting material, the polyolefin graft copolymer of the present invention exhibits physical properties expected from the characteristics of the (meth)acrylic polymer, for example, physical properties representing polarity or physical properties exhibited as a result of polarity, such as low contact angle, high surface tension, surface wettability, adhesiveness, paintability, stainability, colorability, high dielectric constant, high dielectric loss tangent, high loss factor, high-frequency sealing properties, and oil resistance, and in addition, weatherability, chemical resistance, abrasion resistance, and the like. In particular, the polyolefin graft copolymers can be used as : polarity-imparting agents (imparting adhesiveness, paintability, stainability, colorability, high-frequency sealing properties, oil resistance and the like) for polyolefin resins or elastomers; compatibilizers; primers; coating materials; adhesives; paint; surfactants for polyolefin/filler composite materials and polyolefin nanocomposites; and other applications. In addition, the polyolefin graft copolymers can also be used for thermoplastic elastomers, high-impact plastics, and the like, each including a polyolefin as a resin component and a (meth)acrylic rubber as a rubber component.

Furthermore, the composition containing the graft copolymer of the present invention may include common additives known in the plastic and rubber industry, for example, compounding agents, such as a plasticizer, a stabilizer, a lubricant, an ultraviolet absorber, an antioxidant, a flame retardant, a flame retardant auxiliary agent, a pigment, a glass fiber, a filler, and a polymer processing aid.

As the method for producing a composition containing a graft copolymer of the present invention, a method that is commonly used for compounding can be employed. For example, the composition can be produced by melt-kneading a thermoplastic resin or an elastomer, a graft copolymer of the present invention, and as required, additive components using a heating kneader, such as a single-screw extruder, a twin-screw extruder, a roller mill, a Banbury mixer, a Brabender, a kneader, or a high-shear mixer. The order of kneading of the components is not particularly limited and may be determined according to the apparatus used, workability, or the physical properties of the resulting composition.

When the thermoplastic resin or the elastomer is produced by emulsion polymerization, the thermoplastic resin or the elastomer and the graft copolymer may be blended in a form of latex and the resultant mixture may then be coprecipitated (coaggregated) to obtain the composition.

The methods for molding a composition containing a graft copolymer produced as described above include methods commonly used for molding compositions, for example, injection molding, extrusion molding, blow molding, calender molding and the like.

## EXAMPLES

The present invention will be described in more detail based on examples, but the present invention is not limited thereto. In the following synthesis examples, examples, and comparative examples, the physical properties and characteristics were measured by the respective methods described below.

[Gel content]

A sample in an amount of about 100 mg was placed in a 300 Mesh net bag made of stainless steel and immersed under stirring in 100 mL of toluene at 100°C for 2 hours. Then, the sample was dried under reduced pressure at room temperature for 4 hours or more, and the weight of the toluene-insoluble component in the sample was measured. The gel content was calculated by the following equation:
$$\text{Gel content (\% by weight)} = \{(\text{dry weight of toluene-insoluble component})/(\text{weight before immersion in toluene})\} \times 100$$

[Tensile properties]

A composition prepared by blending a graft copolymer with a polypropylene was formed into a pressed sheet with a thickness of about 0.7 mm, and three No. 2(1/3) test pieces according to JIS-K7113 Appendix 1 were punched out therefrom. Using an autograph (AUTOGRAPH AG-2000A manufactured by Shimadzu Corp.), tensile testing was performed according to JIS-K7113 at a tensile testing speed of 1.0 mm/min, and the elastic modulus was measured. Furthermore, tensile testing was performed at a tensile testing speed of 16.66 mm/min, and the maximum stress (tensile strength) and the maximum elongation were measured. The averages of the three test pieces were used for evaluation. In the composition having low dispersibility of the resin, cracking and breaking easily occur at the interface between the polypropylene and the resin. Thus, the maximum elongation was used as an index of dispersibility.

(Synthesis Example 1)

(Synthesis of ligand)

A compound represented by the following chemical formula was synthesized according to a method described in J. Org. Chem. Vol. 53(23), 1988, p. 5558:
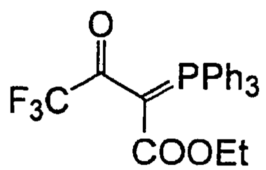

(wherein Ph represents a phenyl group).

(Synthesis Example 2)

(Synthesis of ligand)

A ligand was synthesized with reference to J. Org. Chem. Vol. 53(23), 1988, p. 5558 as described below. Under a nitrogen atmosphere, 2.617 g of pentafluorobenzyltriphenylphosphonium bromide (synthesized in the same manner as that described in Helvetica Chimica Acta, Vol. 76, 1993, p. 1928) and 11 ml of dry THF (manufactured by Wako Pure Chemical) were mixed, and the mixture was cooled to 0°C using an ice bath. Triethylamine (manufactured by Wako Pure Chemical) (1.5 ml) dried with a molecular sieve was added thereto, and stirring was performed for 15 minutes. Subsequently, 0.78 ml of trifluoroacetic anhydride (manufactured by Tokyo Chemical Industry Co., Ltd.) was added dropwise thereto, and reaction was allowed to proceed for one hour at 0°C and for one hour at room temperature (15°C). The filtrate was concentrated and washed with 15 ml of distilled water (manufactured by Wako Pure Chemical), followed

by drying. The resulting product was dissolved in methanol at 60°C, and the solution was gradually cooled to 0°C to perform recrystallization. The yield after drying was 1.5 g. $^1$H-NMR ($CDCl_3$) showed the disappearance of benzyl protons, thus confirming the production of a compound represented by the following chemical formula:

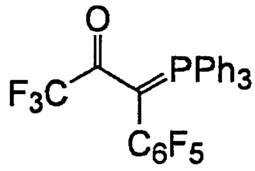

(wherein Ph represents a phenyl group).

(Synthesis Example 3)

(Synthesis of poly(n-butyl acrylate) macromonomer latex)

Into a four-necked glass flask equipped with a stirrer, a thermometer, and a reflux condenser, 280 mL of distilled water (manufactured by Wako Pure Chemical), 64 g of n-butyl acrylate (manufactured by Nippon Shokubai), and 2.64 g of ethylene glycol dicyclopentenyl ether methacrylate (manufactured by Aldrich) were charged, and oxygen was removed by nitrogen bubbling. Sodium dodecyl sulfate (manufactured by Wako Pure Chemical) (280 mg) was added thereto, and stirring was performed to emulsify the mixture. The resulting emulsion was heated to 70°C under a nitrogen stream, and 2 mL of a 6.4% by weight aqueous solution of potassium persulfate (manufactured by Wako Pure Chemical) was added thereto. Reaction was allowed to proceed for 2 hours. Sampling confirmed that the polymerization conversion ratio reached 100%. The temperature of the reaction mixture was increased to 100°C, and the remaining potassium persulfate was thermally decomposed by heating for 3 hours. The reaction mixture was left to cool to room temperature and then neutralized by a 0.1 N aqueous sodium hydroxide solution. A latex of a poly(n-butyl acrylate) macromonomer was obtained thereby.

(Synthesis Example 4)

(Synthesis of poly(methyl methacrylate) macromonomer latex)

A latex of a poly(methyl methacrylate) macromonomer was obtained by performing polymerization, thermal decomposition, and neutralization in the same procedure as in Synthesis Example 3 except that 64 g of methyl methacrylate (manufactured by Nippon Shokubai) was used instead of 64 g of n-butyl acrylate.

(Synthesis Example 5)

(Synthesis of polystyrene macromonomer latex)

A latex of a polystyrene macromonomer was obtained by performing polymerization, thermal decomposition, and neutralization in the same procedure as in Synthesis Example 3 except that 64 g of styrene (manufactured by Wako Pure Chemical) was used instead of 64 g of n-butyl acrylate.

(Synthesis Example 6)

(Synthesis of poly(methyl methacrylate) macromonomer latex)

Into a four-necked glass flask equipped with a stirrer, a thermometer, and a reflux condenser, 500 mL of distilled water (manufactured by Wako Pure Chemical), 114.3 g of methyl methacrylate (manufactured by Nippon Shokubai), and 29.96 g of ethylene glycol dicyclopentenyl ether methacrylate (manufactured by Aldrich) were charged, and oxygen was removed by nitrogen bubbling. Sodium dodecyl sulfate (manufactured by Wako Pure Chemical) (0.5 g) was added thereto, and stirring was performed to emulsify the mixture. The resulting emulsion was heated to 70°C under a nitrogen stream, and 2.29 g of a 6.4% by weight aqueous solution of potassium persulfate (manufactured by Wako Pure Chemical) was added thereto. Reaction was allowed to proceed for 2 hours. Sampling confirmed that the polymerization conversion

ratio reached 100%. The temperature of the reaction mixture was increased to 100°C, and the remaining potassium persulfate was thermally decomposed by heating for 3 hours. The reaction mixture was left to cool to room temperature and then neutralized by a 0.1 N aqueous sodium hydroxide solution. A latex of a poly(methyl methacrylate) macromonomer was obtained thereby.

(Example 1)

(Synthesis of poly(n-butyl acrylate)/polyethylene graft copolymer)

In a 20-mL Schlenk flask, under an argon atmosphere, 25.8 mg of nickel acetylacetonate (manufactured by Aldrich) which had been dried under a reduced pressure at 90°C for one hour, was dissolved in 5 mL of toluene (manufactured by Wako Pure Chemical) which had been dried over calcium hydride (manufactured by Wako Pure Chemical), and 0.05 mL of cyclooctadiene (manufactured by Wako Pure Chemical) was added thereto. The mixture was cooled to 0°C, and 0.075 mL of a trioctyl aluminum/toluene solution (2 mol/L) was added dropwise thereto. Then, the mixture was brought back to room temperature and stirred for 2 hours. Thus, a toluene solution of bis(cyclooctadiene)nickel was prepared. The compound obtained in Synthesis Example 1 (12.2 mg) was added to the resulting solution, and 1 mL of 1-hexene (manufactured by Wako Pure Chemical) which had been dried over calcium hydride (manufactured by Wako Pure Chemical), was further added thereto. Then, heating was performed at 60°C for 7.5 minutes to generate a coordination polymerization catalyst active species.

The poly(n-butyl acrylate) macromonomer latex (50 mL) obtained in Synthesis Example 3 was placed in a 100-mL Schlenk flask, 400 mg of sodium dodecyl sulfate (manufactured by Wako Pure Chemical) was dissolved therein, and oxygen was removed by argon bubbling.

The previously prepared coordination polymerization catalyst active species was added thereto and homogeneously dispersed using an ultrasonic generator (manufactured by SMT Co., Ltd.). The dispersion liquid was placed in an argon-purged 300-mL autoclave, ethylene (manufactured by Sumitomo Seika Chemicals Co., Ltd.) which had been purified with a deoxigenating agent and a dehydrating agent (i.e., Gasclean and Drycolumn, each manufactured by Nikka Seiko Co., Ltd.), was introduced thereinto. And then the pressure of the system was increased to 2.8 MPa. Polymerization was performed at 60°C for one hour. Then, unreacted ethylene was removed and a product was isolated. The resulting product was obtained in a mixture of the latex and the precipitate. The latex was salted out with an aqueous solution of calcium chloride, followed by post-treatment, i.e., filtration, water washing, and drying. The precipitate was directly dried. Acordingly, a polyolefin graft copolymer of the present invention obtained were 10.38 g of the salting-out product of the latex and 0.05 g of the precipitate. FT-IR spectra confirmed the presence of signals derived from polyethylene and signals from poly(n-butyl acrylate) in both of the salted-out product and the precipitate.

(Example 2)

(Synthesis of poly(n-butyl acrylate)/polyethylene graft copolymer)

In a 20-mL Schlenk flask, under an argon atmosphere, 25.8 mg of nickel acetylacetonate (manufactured by Aldrich) which had been dried under reduced pressure at 90°C for one hour', was dissolved in 5 mL of toluene (manufactured by Wako Pure Chemical) which had been dried over calcium hydride (manufactured by Wako Pure Chemical), and 0.05 mL of cyclooctadiene (manufactured by Wako Pure Chemical) was added thereto. The mixture was cooled to 0°C, and 0.075 mL of a trioctyl aluminum/toluene solution (2 mol/L) was added dropwise thereto. Then, the mixture was brought back to room temperature and stirred for 2 hours. Thus, a toluene solution of bis(cyclooctadiene)nickel was prepared. The compound obtained in Synthesis Example 1 (12.2 mg) was added to the resulting solution, and 1 mL of 1-hexene (manufactured by Wako Pure Chemical) which had been dried over calcium hydride (manufactured by Wako Pure Chemical), was further added thereto. Then, heating was performed at 60°C for 7.5 minutes to generate a coordination polymerization catalyst active species. In another 20-mL Schlenk flask, the coordination polymerization catalyst active species was mixed with 5 mL of 0.1% by weight aqueous solution of sodium dodecyl sulfate (manufactured by Wako Pure Chemical) from which oxygen had been removed by argon bubbling, and homogeneously dispersed using an ultrasonic generator (manufactured by SMT Co., Ltd.).

The poly(n-butyl acrylate) macromonomer latex (50 mL) obtained in Synthesis Example 3 was placed in a 100-mL Schlenk flask, 400 mg of sodium dodecyl sulfate (manufactured by Wako Pure Chemical) was dissolved therein, and oxygen was removed by argon bubbling. The resulting solution was placed in an argon-purged, 300-mL autoclave. The previously prepared dispersion liquid of the coordination polymerization catalyst active species was added thereto, ethylene (manufactured by Sumitomo Seika Chemicals Co., Ltd.) which had been purified with a deoxigenating agent and a dehydrating agent (i.e., Gasclean and Drycolumn, each manufactured by Nikka Seiko Co., Ltd.), was introduced thereinto, and the pressure of the system was increased to 2.8 MPa. Polymerization was performed at 60°C for one

hour. Then, unreacted ethylene was removed and a product was isolated. The product obtained were 9.44 g of salting-out product of the latex and 2.17 g of the precipitate. FT-IR spectra confirmed the presence of signals derived from polyethylene and signals from poly(n-butyl acrylate) in both of the salted-out product and the precipitate.

(Example 3)

(Synthesis of poly(n-butyl acrylate)/polyethylene graft copolymer)

Polymerization was performed in the same procedure as in Example 1 except that 14.8 mg of the compound obtained in Synthesis Example 2 was used instead of 12.2 mg of the compound obtained in Synthesis Example 1.

The amount of the product obtained by salting-out of the latex was 10.97 g, and the amount of the precipitate was 2.11 g. The amount of polymerized ethylene in Example 3 (using the compound obtained in Synthesis Example 2) was larger than that in Example 1 (using the compound obtained in Synthesis Example 1).

FT-IR spectra confirmed the presence of signals derived from polyethylene and signals from poly(n-butyl acrylate) in both of the salted-out product and the precipitate. The gel content (to hot toluene) of the salted-out product was 87.6%. FT-IR spectra confirmed the presence of both of the signals from polyethylene and signals from poly(n-butyl acrylate) in the gel component. Thus, the presence of a poly(n-butyl acrylate)/polyethylene graft copolymer was confirmed.

(Example 4)

(Synthesis of poly(methyl methacrylate)/polyethylene graft copolymer)

Polymerization was performed in the same procedure as in Example 1 except that 14.8 mg of the compound obtained in Synthesis Example 2 was used instead of 12.2 mg of the compound obtained in Synthesis Example 1, and 50 mL of the poly(methyl methacrylate) macromonomer latex obtained in Synthesis Example 4 was used instead of 50 mL of the poly(n-butyl acrylate) macromonomer latex obtained in Synthesis Example 3.

The amount of the product obtained by salting-out of the latex was 6.60 g, and the amount of the precipitate was 11.18 g. FT-IR spectra confirmed the presence of signals from polyethylene and signals from poly(methyl methacrylate) in both of the salted-out product and the precipitate. The gel content (to hot toluene) of the salted-out product was 100%. FT-IR spectra confirmed the presence of both of the signals from polyethylene and signals from poly(methyl methacrylate) in the gel component. Thus, the presence of a poly(methyl methacrylate)/polyethylene graft copolymer was confirmed.

(Example 5)

(Synthesis of poly(methyl methacrylate)/polyethylene graft copolymer)

In a 20-mL Schlenk flask, under an argon atmosphere, about 200 μmol of nickel naphthenate (manufactured by Strem) which had been dried under reduced pressure at 90°C for one hour, was dissolved in 4 mL of toluene (manufactured by Wako Pure Chemical) which had been dried over calcium hydride (manufactured by Wako Pure Chemical), and 0.10 mL of cyclooctadiene (manufactured by Wako Pure Chemical) was added thereto. The mixture was cooled to 0°C, and 0.15 mL of a trioctyl aluminum/toluene solution (2 mol/L) was added dropwise thereto. Then, the mixture was brought back to room temperature and stirred for 2 hours. Thus, a toluene solution of bis(cyclooctadiene) nickel was prepared. The compound obtained in Synthesis Example 2 (29.6 mg) was added to the resulting solution, and 2 mL of 1-hexene (manufactured by Wako Pure Chemical), which had been dried over calcium hydride (manufactured by Wako Pure Chemical), was further added thereto. Then, heating was performed at 60°C for 7.5 minutes to generate a coordination polymerization catalyst active species.

The poly(methyl methacrylate) macromonomer latex (50 mL) obtained in Synthesis Example 4 was placed in a 100-mL Schlenk flask, 400 mg of sodium dodecyl sulfate (manufactured by Wako Pure Chemical) was dissolved therein, and oxygen was removed by argon bubbling.

The previously prepared coordination polymerization catalyst active species was added thereto and homogeneously dispersed using an ultrasonic generator (manufactured by SMT, Co., Ltd.). The dispersion liquid was placed in an argon-purged 300-mL autoclave, ethylene (manufactured by Sumitomo Seika Chemicals Co., Ltd.) which had been purified with a deoxigenating agent and a dehydrating agent (i.e., Gasclean and Drycolumn, each manufactured by Nikka Seiko Co., Ltd.), was introduced thereinto. And the pressure of the system was increased to 2.7 MPa. Polymerization was performed at 60°C for one hour. Then, unreacted ethylene was removed and a product was isolated. The resulting product was a mixture of a latex and a precipitate. The latex was salted out with an aqueous solution of calcium chloride, followed by post-treatment, i.e., filtration, water washing, and drying. The precipitate was directly dried. Accordingly, a

polyolefin graft copolymer of the present invention was obtained. The product obtained were 17.68 g of salted-out product of the latex and 0.61 g of the precipitate. FT-IR spectra confirmed the presence of both of the signals derived from polyethylene and signals from poly(methyl methacrylate) in the salted-out product.

(Example 6)

(Polystyrene/polyethylene graft copolymer)

Polymerization was performed in the same procedure as in Example 5 except that 50 mL of polystyrene macromonomer latex obtained in Synthesis Example 5 was used instead of 50 mL of the poly(methyl methacrylate) macromonomer latex obtained in Synthesis Example 4.

The amount of the product obtained by salting-out of the latex was 11 g. FT-IR spectra confirmed the presence of both of the signals from polyethylene and signals from polystyrene.

(Example 7)

Polymerization was performed in the same procedure as in Example 5 except that 50 mL of poly(methyl methacrylate) macromonomer latex obtained in Synthesis Example 6 was used instead of 50 mL of the poly(methyl methacrylate) macromonomer latex obtained in Synthesis Example 4. The amount of the product obtained by salting-out of the latex was 11 g. FT-IR spectra confirmed the presence of both of the signals derived from polyethylene and signals from polystyrene.

(Examples 8 and 9)

(Composition including polypropylene resin and poly(methyl methacrylate)/polyethylene graft copolymer)

Using a laboplastomill (manufactured by Toyo Seiki, capacity 30 cc), 20 g of a polypropylene resin (F232DC manufactured by Grand Polymer) and 4 g of the product obtained by salting-out of the latex of the poly(methyl methacrylate)/polyethylene graft copolymer in each of Examples 5 and 7 were kneaded at 200°C and 130 rpm for 10 minutes, and then a sheet with a thickness of about 0.7 mm was formed by pressing (pressing conditions: at 200°C under zero pressure for 10 min; → at 200°C under pressure of 50 $kgf/cm^2$ for 10 min; → and at room temperature under pressure of 50 $kgf/cm^2$ for 5 min). The tensile properties of the resulting sheets were measured. The results are shown in Table 1.

(Comparative Examples 1 and 2)

(Composition including polypropylene resin and poly(methyl methacrylate) macromonomer)

Using a laboplastomill (manufactured by Toyo Seiki, capacity 30 cc), 20 g of a polypropylene resin (F232DC manufactured by Grand Polymer) and 4 g of the product obtained by salting-out of the poly(methyl methacrylate) macromonomer latex in each of Synthesis Examples 4 and 6 were kneaded at 200°C and 130 rpm for 10 minutes, and then a sheet with a thickness of about 0.7 mm was formed by pressing. The tensile properties of the resulting sheets were measured. The results thereof are shown in Table 1.

(Comparative Example 3)

(Polypropylene resin)

Using a laboplastomill (manufactured by Toyo Seiki, capacity 30 cc), 20 g of a polypropylene resin (F232DC manufactured by Grand Polymer) was kneaded at 200°C and 130 rpm for 10 minutes, and then a sheet with a thickness of about 0.7 mm was formed by pressing. The tensile properties of the resulting sheet were measured. The results thereof are shown in Table 1.

[Table 1]

| | Tensile properties | | |
|---|---|---|---|
| | Stress at break (MPa) | Elongation at break (%) | Elastic modulus (MPa) |
| Comparative Example 1 | 2.9 | 13 | 449 |
| Comparative Example 2 | 3.9 | 21 | 688 |
| Comparative Example 3 | 35.1 | 730 | 543 |
| Example 8 | 8.9 | 29 | 655 |
| Example 9 | 20.0 | 455 | 772 |

(Synthesis Example 7)

(Synthesis of ligand)

A ligand was synthesized with reference to J. Org. Chem. Vol. 53(23), 1988, p. 5558 as described below. Under a nitrogen atmosphere, 1.736 g of chloromethyltriphenylphosphonium chloride (manufactured by Wako Pure Chemical) and 11 ml of dry THF (manufactured by Wako Pure Chemical) were mixed, and the mixture was cooled to 0°C using an ice bath. Triethylamine (manufactured by Wako Pure Chemical) (1.5 ml) dried with a molecular sieve was added thereto, and stirring was performed for 15 minutes. Subsequently, 0.78 ml of trifluoroacetic anhydride (manufactured by Tokyo Chemical Industry Co., Ltd.) was added dropwise thereto, and reaction was allowed to proceed for one hour at 0°C and for one hour at room temperature (15°C). The filtrate was concentrated and washed with 15 ml of distilled water (manufactured by Wako Pure Chemical), followed by drying. The resulting product was dissolved in methanol at 60°C, and the solution was gradually cooled to 0°C to perform recrystallization. The yield after drying was 0.45 g. $^1$H-NMR ($CDCl_3$) showed the disappearance of protons derived from chloromethyltriphenylphosphonium chloride, at around 6.3 ppm, thus confirming the production of a compound represented by the following chemical formula:
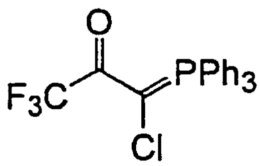

(wherein Ph represents a phenyl group).

(Synthesis Example 8)

(Synthesis of ligand)

A ligand was synthesized with reference to J. Org. Chem. Vol. 53(23), 1988, p. 5558 as described below. Under a nitrogen atmosphere, 2.180 g of bromomethyltriphenylphosphonium bromide (manufactured by Wako Pure Chemical) and 11 ml of dry THF (manufactured by Wako Pure Chemical) were mixed, and the mixture was cooled to 0°C using an ice bath. Triethylamine (manufactured by Wako Pure Chemical) (1.5 ml) dried with a molecular sieve was added thereto, and stirring was performed for 15 minutes. Subsequently, 0.78 ml of trifluoroacetic anhydride (manufactured by Tokyo Chemical Industry Co., Ltd.) was added dropwise thereto, and reaction was allowed to proceed for one hour at 0°C and for one hour at room temperature (15°C). The filtrate was concentrated and washed with 15 ml of distilled water (manufactured by Wako Pure Chemical), followed by drying. The resulting product was dissolved in methanol at 60°C, and the solution was gradually cooled to 0°C to perform recrystallization. The yield after drying was 0.31 g. $^1$H-NMR ($CDCl_3$) showed the disappearance of protons derived from bromomethyltriphenylphosphonium bromide, at around 5.9 ppm, thus confirming the production of a compound represented by the following chemical formula:
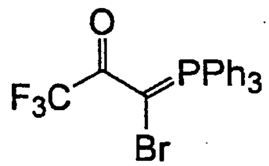

(wherein Ph represents a phenyl group).

(Synthesis Example 9)

(Synthesis of poly(n-butyl acrylate) macromonomer latex)

Into a four-necked glass flask equipped with a stirrer, a thermometer, and a reflux condenser, 280 mL of distilled water (manufactured by Wako Pure Chemical), 64 g of n-butyl acrylate (manufactured by Nippon Shokubai), and 2.64 g of ethylene glycol dicyclopentenyl ether methacrylate (manufactured by Aldrich) were charged, and oxygen was removed by nitrogen bubbling. Sodium dodecyl sulfate (manufactured by Wako Pure Chemical) (280 mg) was added thereto, and stirring was performed to emulsify the mixture. The resulting emulsion was heated to 70°C under a nitrogen stream, and 2 mL of a 6.4% by weight aqueous solution of potassium persulfate (manufactured by Wako Pure Chemical) was added thereto. Reaction was allowed to proceed for 2 hours. Sampling confirmed that the polymerization conversion ratio reached 100%. The temperature of the reaction mixture was increased to 100°C, and the remaining potassium persulfate was thermally decomposed by heating for 3 hours. The reaction mixture was left to cool to room temperature and then neutralized by a 0.1 N aqueous sodium hydroxide solution. A latex of a poly(n-butyl acrylate) macromonomer was thereby obtained.

(Example 10)

(Synthesis of poly(n-butyl acrylate)/polyethylene graft copolymer)

In a 20-mL Schlenk flask, under an argon atmosphere, 25.8 mg of nickel acetylacetonate (manufactured by Aldrich) which had been dried under reduced pressure at 90°C for one hour, was dissolved in 5 mL of toluene (manufactured by Wako Pure Chemical) which had been dried over calcium hydride (manufactured by Wako Pure Chemical), and 0.05 mL of cyclooctadiene (manufactured by Wako Pure Chemical) was added thereto. The mixture was cooled to 0°C, and 0.075 mL of a trioctyl aluminum/toluene solution (2 mol/L) was added dropwise thereto. Then, the mixture was brought back to room temperature and stirred for 2 hours. Thus, a toluene solution of bis(cyclooctadiene)nickel was prepared. The compound obtained in Synthesis Example 7 (11.2 mg) was added to the resulting solution, and 1 mL of 1-hexene (manufactured by Wako Pure Chemical) which had been dried over calcium hydride (manufactured by Wako Pure Chemical), was further added thereto. Then, heating was performed at 60°C for 7.5 minutes to generate a coordination polymerization catalyst active species.

The poly(n-butyl acrylate) macromonomer latex (50 mL) obtained in Synthesis Example 9 was placed in a 100-mL Schlenk flask, 400 mg of sodium dodecyl sulfate (manufactured by Wako Pure Chemical) was dissolved therein, and oxygen was removed by argon bubbling.

The previously prepared coordination polymerization catalyst active species was added thereto and homogeneously dispersed using an ultrasonic generator UH-600 (manufactured by SMT Co., Ltd.). The dispersion liquid was placed in an argon-purged 300-mL autoclave, ethylene (manufactured by Sumitomo Seika Chemicals Co., Ltd.) which had been purified with a deoxigenating agent and a dehydrating agent (i.e., Gasclean and Drycolumn, each manufactured by Nikka Seiko Co., Ltd.) was introduced thereinto, and the pressure of the system was increased to 2.8 MPa. Polymerization was performed at 60°C for one hour. Then, unreacted ethylene was removed and a product was isolated. The resulting product was a mixture of a latex and a precipitate. The latex was salted out with an aqueous solution of calcium chloride, followed by post-treatment, i.e., filtration, water washing, and drying. The precipitate was directly dried. Accordingly, a polyolefin graft copolymer of the present invention was obtained. The products obtained were 10.5 g of salting-out product of the latex and 0.1 g of precipitate. FT-IR spectra confirmed the presence of signals derived from polyethylene and signals from poly(n-butyl acrylate) in both of the salted-out product and the precipitate.

(Example 11)

(Synthesis of poly(n-butyl acrylate)/polyethylene graft copolymer)

In a 20-mL Schlenk flask, under an argon atmosphere, 25.8 mg of nickel acetylacetonate (manufactured by Aldrich) which had been dried under reduced pressure at 90°C for one hour, was dissolved in 5 mL of toluene (manufactured by Wako Pure Chemical) which had been dried over calcium hydride (manufactured by Wako Pure Chemical), and 0.05 mL of cyclooctadiene (manufactured by Wako Pure Chemical) was added thereto. The mixture was cooled to 0°C, and 0.075 mL of a trioctyl aluminum/toluene solution (2 mol/L) was added dropwise thereto. Then, the mixture was brought back to room temperature and stirred for 2 hours. Thus, a toluene solution of bis(cyclooctadiene)nickel was prepared. The compound obtained in Synthesis Example 8 (12.4 mg) was added to the resulting solution, and 1 mL of 1-hexene (manufactured by Wako Pure Chemical) which had been dried over calcium hydride (manufactured by Wako Pure Chemical), was further added thereto. Then, heating was performed at 60°C for 7.5 minutes to generate a coordination polymerization catalyst active species. In another 20-mL Schlenk flask, the coordination polymerization catalyst active species was mixed with 5 mL of 0.1% by weight aqueous solution of sodium dodecyl sulfate (manufactured by Wako Pure Chemical) from which oxygen was removed by argon bubbling, and homogeneously dispersed using an ultrasonic generator UH-600 (manufactured by SMT Co., Ltd.).

The poly(n-butyl acrylate) macromonomer latex (50 mL) obtained in Synthesis Example 9 was placed in a 100-mL Schlenk flask, 400 mg of sodium dodecyl sulfate (manufactured by Wako Pure Chemical) was dissolved therein, and oxygen was removed by argon bubbling. The resulting solution was placed in an argon-purged 300-mL autoclave. The previously prepared dispersion liquid of the coordination polymerization catalyst active species was added thereto, ethylene (manufactured by Sumitomo Seika Chemicals Co., Ltd.) which had been purified with a deoxigenating agent and a dehydrating agent (i.e., Gasclean and Drycolumn, each manufactured by Nikka Seiko Co., Ltd.) was introduced thereinto, and the pressure of the system was increased to 2.8 MPa. Polymerization was performed at 60°C for one hour. Then, unreacted ethylene was removed and a product was isolated. The products obtained were 9.5 g of salting-out product of the latex and 2.0 g of the precipitate. FT-IR spectra confirmed the presence of both of the signals derived from polyethylene and signals from poly(n-butyl acrylate) in each of the salted-out product and the precipitate.

(Example 12)

(Synthesis of poly(n-butyl acrylate)/polyethylene graft copolymer)

Into a 100-mL Schlenk flask, under an argon atmosphere, 1.475 g of chloranil (manufactured by Wako Pure Chemical), 1.574 g of triphenylphosphine (manufactured by Wako Pure Chemical), and 25 mL of argon-deaerated dry toluene (manufactured by Kanto Chemical) were charged, and stirring was performed at room temperature. After 20 minutes, 5 mL of argon-deaerated, dehydrated methanol (manufactured by Wako Pure Chemical) was added thereto. After 20 minutes, a solution of a bis(cyclooctadiene)nickel (manufactured by Kanto Chemical) (1.65 g)/argon-deaerated dry toluene (25mL) (manufactured by Kanto Chemical) was added thereto. Under an argon atmosphere, the resulting solution of the coordination polymerization catalyst active species was added to a 200-mL, four-necked flask charged with a solution of argon-deaerated, distilled water (manufactured by Wako Pure Chemical) and sodium dodecyl sulfate (manufactured by Wako Pure Chemical) (600 mg), and homogeneously dispersed using an ultrasonic generator UH-600 (manufactured by SMT Co., Ltd.).

Under an argon atmosphere, 600 mL of a poly(n-butyl acrylate) macromonomer latex (solid content 150 g, argon-deaerated) prepared as Synthesis Example 9 was placed in a 1-L autoclave (manufactured by Taiatsu Techno Corporation; Model TAS-1), and the temperature was controlled to 50°C. The previously prepared dispersion liquid of the coordination polymerization catalyst activated species was added thereto. Ethylene (manufactured by Sumitomo Seika Chemicals Co., Ltd.) which had been purified with a deoxygenating agent and a dehydrating agent (i.e., Gasclean and Drycolumn, each manufactured by Nikka Seiko Co., Ltd.) was introduced thereinto, and the pressure of the system was increased to 2.8 to 3 MPa. Polymerization was performed at 50°C for 6 hours. Then, unreacted ethylene was removed and a product was isolated. The product obtained were 100 g of salting-out product of the latex and 25.2 g of the precipitate. FT-IR spectra confirmed the presence of both of signals derived from polyethylene and signals from poly (n-butyl acrylate) in each of the salted-out product and the precipitate.

(Example 13)

Polymerization was performed in the same procedure as in Example 12 except that 1.776 g of 2,6-difluoro-1,4-benzoquinone (synthesized according to J. Chem. Soc. Perkin Trans., Vol. 1, 2002, p. 2719) instead of 1.475 g of chloranil.

The amount of the product obtained by salting-out of the latex was 120 g, and the amount of the precipitate was 5.0 g. FT-IR spectra confirmed the presence of both of the signals derived from polyethylene and signals from poly (n-butyl acrylate) in each of the salted-out product and the precipitate.

As described above, it was possible to produce copolymers of macromonomer latices obtained by radical emulsion polymerization of olefin monomers (in particular, ethylene) and vinyl monomers (in particular, (meth)acrylic monomers), using inexpensive nickel catalysts, without using a cocatalyst. In the compositions containing the copolymers of macromonomer lattices and polypropylene resins, the effect of copolymerization is shown as the increase in tensile elastic modulus.

## Claims

1. A polyolefin graft copolymer produced by copolymerizing a macromonomer latex which is obtained by radical emulsion polymerization of a vinyl monomer, with an olefin monomer in the presence of an olefin polymerization catalyst represented by the following general formula (1), (2), or (3) :

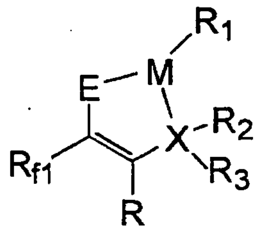

(1)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; $R_{f1}$ represents a fluorine atom or a fluorinated hydrocarbon group having 1 to 20 carbon atoms; and R represents hydrogen, a hydrocarbon group having 1 to 20 carbon atoms, a halogen atom, a halogenated hydrocarbon group having 1 to 20 carbon atoms, a hydroxyl group, an ether group including a hydrocarbon group having 1 to 20 carbon atoms, an ester group including a hydrocarbon group having 1 to 20 carbon atoms, a sulfonate, or a sulfonic ester group including a hydrocarbon group having 1 to 20 carbon atoms)

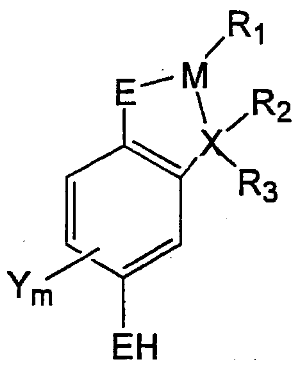

(2)

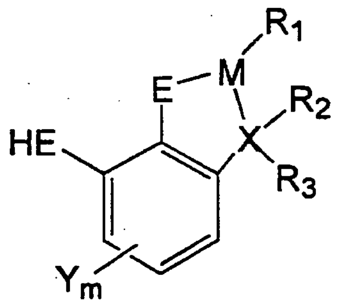

(3)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; Y represents a halogen atom; and m represents 1 to 3).

**2.** The polyolefin graft copolymer according to Claim 1, wherein the olefin polymerization catalyst is represented by the following general formula (4):

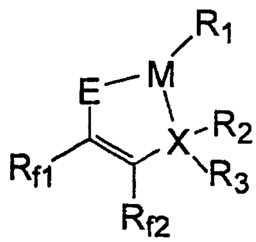

(4)

(wherein M represents nickel, palladium, or platinum; E represents oxygen or sulfur; X represents phosphorus, arsenic, or antimony; $R_1$, $R_2$, and $R_3$ each independently represent hydrogen or a hydrocarbon group having 1 to 20 carbon atoms; and $R_{f1}$ and $R_{f2}$ each independently represent a fluorine atom or a fluorinated hydrocarbon group having 1 to 20 carbon atoms).

**3.** The polyolefin graft copolymer according to Claim 1, wherein, in the olefin polymerization catalyst represented by the general formula (1), M represents nickel.

**4.** The polyolefin graft copolymer according to Claim 1, wherein, in the olefin polymerization catalyst represented by the general formula (2), M represents nickel and Y represents fluorine.

**5.** The polyolefin graft copolymer according to Claim 1, wherein, in the olefin polymerization catalyst represented by the general formula (3), M represents nickel and Y represents fluorine.

**6.** The polyolefin graft copolymer according to Claim 2, wherein, in the olefin polymerization catalyst represented by the general formula (4), M represents nickel.

**7.** The polyolefin graft copolymer according to Claim 1 or 3, wherein, in the olefin polymerization catalyst represented by the general formula (1), E represents oxygen and X represents phosphorus.

**8.** The polyolefin graft copolymer according to Claim 1 or 4, wherein, in the olefin polymerization catalyst represented by the general formula (2), E represents oxygen and X represents phosphorus.

**9.** The polyolefin graft copolymer according to Claim 1 or 5, wherein, in the olefin polymerization catalyst represented by the general formula (3), E represents oxygen and X represents phosphorus.

**10.** The polyolefin graft copolymer according to Claim 2 or 6, wherein, in the olefin polymerization catalyst represented by the general formula (4), E represents oxygen and X represents phosphorus.

**11.** The polyolefin graft copolymer according to any one of Claims 1 to 10, wherein the olefin monomer is an $\alpha$-olefin having 10 or less carbon atoms.

**12.** The polyolefin graft copolymer according to any one of Claims 1 to 11, wherein the vinyl monomer is a monomer containing 50 percent or more by weight of a (meth)acrylate.

**13.** A method for producing the polyolefin graft copolymer according to any one of Claims 1 to 12.

**14.** The method for producing the polyolefin graft copolymer according to Claim 13, wherein the method comprises the step of decomposing a radical initiator remaining in the macromonomer latex before the step of copolymerizing the olefin monomer.

**15.** A composition containing the polyolefin graft copolymer according to any one of Claims 1 to 12.

**INTERNATIONAL SEARCH REPORT**

International application No.
PCT/JP2005/010820

A. CLASSIFICATION OF SUBJECT MATTER
Int.Cl[7] C08F290/04, C08F4/80

According to International Patent Classification (IPC) or to both national classification and IPC

B. FIELDS SEARCHED

Minimum documentation searched (classification system followed by classification symbols)
Int.Cl[7] C08F290/00-290/14, C08F299/00-299/08, C08F4/80

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-12742 A (Idemitsu Kagaku Kabushiki Kaisha), 15 January, 2003 (15.01.03), Claims; Par. Nos. [0019] to [0026]; examples (Family: none) | 1-15<br>13-14 |
| X<br>Y | JP 2003-147032 A (KANEKA Corp.), 21 May, 2003 (21.05.03), Claims; examples & WO 03/20779 A1 & EP 1440988 A1 & US 2004-242790 A | 1-12,15<br>13-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 September, 2005 (13.09.05) | Date of mailing of the international search report<br>04 October, 2005 (04.10.05) |
| Name and mailing address of the ISA/<br>Japanese Patent Office<br>Facsimile No. | Authorized officer<br><br>Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003147032 A


### Non-patent literature cited in the description


- *Angew. Chem. Int. Ed.,* 2002, vol. 41, 544
- Polymer Handbook. John Wiley & Sons
- *J. Org. Chem.,* 1988, vol. 53 (23), 5558
- *Helvetica Chimica Acta,* 1993, vol. 76, 1928
- *J. Chem. Soc. Perkin Trans.,* 2002, vol. 1, 2719